## Europäisches Patentamt

## European Patent Office

## Office européen des brevets

(19)

(11) Veröffentlichungsnummer: **0 121 202**

**A2**

(12) **EUROPÄISCHE PATENTANMELDUNG**

(21) Anmeldenummer: **84103271.7**

(22) Anmeldetag: **24.03.84**

(51) Int. Cl.³: **B 23 B 31/34**

(30) Priorität: **31.03.83 IT 2041583**

(43) Veröffentlichungstag der Anmeldung:
**10.10.84 Patentblatt 84/41**

(84) Benannte Vertragsstaaten:
**AT BE CH DE FR GB LI LU NL SE**

(71) Anmelder: **Tecnomors S.p.A.**
**Via Roma 85**
**I-28017 S. Maurizio d'Opaglio Novara(IT)**

(72) Erfinder: **Zucchetti, Renzo**
**Via Reg. Baravello**
**I-28040 Varallo (Novara)(IT)**

(72) Erfinder: **Giubertoni, Adelmo**
**Via XXIV Maggio, 8**
**I-28040 Varallo (Novara)(IT)**

(74) Vertreter: **de Dominicis, Riccardo et al,**
**de Dominicis & Partners S.a.s. Via Brera, 6**
**I-20121 Milano(IT)**

(54) Vorrichtung zur Winkeldrehung von vorbestimmten Winkelwerten und zum Einspannen eines Einspannzapfens, z. B. eines Spannfutters.

(57) Eine Vorrichtung zur Winkeldrehung von vorbestimmten Winkelwerten und zum Einspannen eines Einspannzapfens (10), z.B. eines Spannfutters, bei der die zwei mit zugeordneten auf dem Einspannzapfen (10) ausgearbeiteten Anschlagsdrehungsflaechen (8, 13) zusammenarbeitenden vorgesehenen schraegen Drehungsebenen (6, 7) auf einer und derselben Kolbenstange (3) einer doppeltwirkenen Kolben/Zylinder-Steuereinheit (2) entgegengesetzt und gegeneinander versetzt ausgearbeitet sind.

Es wird ein gedrungener und beschraenkter Platzbedarf sowie eine schnelle und zuverlaessige Drehungsbewegung des Einspannzapfens (10) erzielt.

FIG.1

EP 0 121 202 A2

1

Tecnomors S.p.A.
Via Roma 85
28017 S. Maurizio d'Opaglio (Novara), Italien

Vorrichtung zur Winkeldrehung von vorbestimmten Winkelwerten und zum Einspannen eines Einspannzapfens, z.B. eines Spannfutters.

Die vorliegende Erfindung bezieht sich auf eine Vorrichtung zur Winkeldrehung von vorbestimmten Winkelwerten und zum Einspannen eines Einspannzapfens, z.B. eines Spannfutters.

Vorrichtungen dieser Art sind an sich in verschiedenen Ausfuehrungsformen schon bekannt. Dieselben weisen den gemeinsamen Nachteil auf, dass fuer die Ausfuehrung der Dreh- und Einspannbewegungen des Einspannzapfens des Spannfutters od. dgl. zwei oder mehrere Kolben/Zylinder-Einheiten erfoderlich sind.

Dies bedingt jedoch ziemlich grosse Abmessungen und deshalb Aufnahmeschwierigkeiten zur Aufnahme dieser Einrichtungen einerseits und einen erheblichen Aufwand von Apparaten und Zubehoerteilen fuer die Steuereinheit bzw. fuer das Steueraggregat fuer die genannten Vorrichtungen andererseits.

Darueber hinaus bedingt die Notwendigkeit des Eingreifens zahlreicher Bestandteile zur Durchfuehrung der Drehung des Einspannzapfens eine ziemlich langsame Drehung des genannten Einspannzapfens.

Der vorliegenden Erfindung liegt die Aufgabe zugrunde, eine Vorrichtung der genannten Art zu schaffen, die eine einfache Bauweise aufweist, sowie einen aeusserst gedrungenen Platzbedarf sowie eine herabgesetzte Anzahl von Bestandteilen zur Drehung und zum Einspannen des Einspannzapfens benoetigt, so dass bei gleichem aeusseren Durchmesser der Vorrichtung, eine groessere Aufnahmefaehigkeit fuer das zu bearbeitende Werkstueck sowie auch eine schnelle und sichere Drehung des Einspannzapfens gewaehrleistet wird.

Im Rahmen obiger Aufgabe wird ferner eine einfachere Steuereinheit der vorgeschlagenen Vorrichtung geschaffen, wobei dies indirekterweise eine zuverlaessigere Betriebsweise der erfindungsgemaessen Vorrichtung gewaehrleistet.

Ausgehend von einer Vorrichtung zur Winkeldrehung von vorbestimmten Winkelwerten und zum Einspannen eines Einspannzapfens, z.B. eines Spannfutters, enthaltend zwei schraege Drehungssteuerebenen, sowie auf Umfangskraenzen des Einspannzapfens des Spannfutters od. dgl. verteilte Anschlagdrehungsflaechen, wird die der vorliegenden Erfindung zugrunde gelegte Aufgabe erfindungsgemaess dadurch geloest, dass dieselbe auf ein und derselben Kolbenstange einer doppeltwirkenden Kolben/Zylinder-Steuereinheit zwei zueinander entgegengesetzt und in Laengsrichtung der Kolbenstange um den Wert $s$ versetzt angeordneten schraegen Drehungssteuerebenen aufweist, eine jede der letzteren mit einer Anzahl von auf wenigstens zwei voneinander um den genannten Wert $s$ des senkrecht in bezug auf die genannte Kolbenstange angeordneten Anspannzapfens des Spannfutters od. dgl. versetzten Umfangskraenze gleichmaessig verteilten Anschlagdrehungsflaechen zusammenarbeitet, so dass waehrend der Bewe-

3

gung der Kolbenstange in der einen Richtung eine erste Drehungssteuerebene in Anlage mit einer Anschlagdrehungsflaeche eines ersten Umfangskranzes des Einspannzapfens kommt und die Drehung des letzteren fuer einen ersten Teilwinkelwert bewirkt und waehrend der Bewegung der Kolbenstange in der anderen Richtung die zweite Drehungssteuerebene in Anlage mit einer Anschlagdrehungsflaeche eines zweiten Umfangskranzes des Einspannzapfens kommt und die Drehung des letzteren fuer einen zweiten Teil – bzw. Vervollstaendigungswinkelwert der gewuenschten Winkeldrehung sowie das gleichzeitige Einspannen des Einspannzapfens in der Arbeitslage bewirkt.

Mit der vorgeschlagenen erfindungsgemaessen Einrichtung wird der Vorteil einer aeusserst einfachen Bauweise erreicht, die eine einzige doppeltwirkende Kolben/Zylinder-Steuereinheit erfordert, deren Kolbenstange einen als Mehrfachschieber wirkenden Schiebeabschnitt aufweist, der beide eine verschiedene Schraege und Abmessung aufweisenden Drehungssteuerebenen enthaelt, wobei das freie Kolbenstangenende in einer Gleitfuehrungshalterung beweglich aufgenommen bzw. gefuehrt ist.

Noch ein weiterer Vorteil der erfindungsgemaessen Vorrichtung ist darin zu sehen, dass mit einer einzigen doppeltwirkenden Kolben/Zylinder-Steuereinheit sowohl die winklige Drehung als auch das Einspannen des Einspannzapfens nach der Drehung des letzteren fuer den gewuenschten bzw. eingestellten Winkelwert erreicht werden.

Ein weiterer Vorteil der erfindungsgemaessen Vorrichtung besteht darin, dass mit einer einzigen doppeltwirkenden Kolben/Zylinder- -Steuereinheit die Einspannzapfendrehung fuer die eingestellten Winkelwerte auf eine rasche und aeusserst zuverlaessige Weise bewirkbar ist, und zwar in Anwesenheit eines sehr einfachen und deshalb ebenfalls zuverlaessigen Steuerkreislaufs.

Noch ein Vorteil der erfindungsgemaessen Vorrichtung besteht darin, dass bei gleichen aeusseren Abmessungen in bezug auf die bekannten Einrichtungen dieser Art eine groessere Aufnahmefaehigkeit der zu bearbeitenden Werkstuecke erzielt wird.

Ein weiterer Vorteil der vorgeschlagenen Vorrichtung ist darin zu sehen, dass loesbare schraege Drehungssteuerebeneneinsaetze, die verschiedene Schraege aufweisen, vorgesehen werden, so dass es moeglich ist, den Gesamtwert der gewuenschten Winkeldrehung bzw. von einer der zwei Teildrehungen oder von beiden Teildrehungen von Fall zu Fall zu aendern.

Weitere Merkmale und Vorteile der erfindungsgemaessen Vorrichtung zur Winkeldrehung von vorbestimmten Winkelwerten und zum Einspannen eines Einspannzapfens sind der nachfolgenden Beschreibung unter Bezugnahme auf die beigefuegten Zeichnungen naeher entnehmbar, die beispielsweise und nicht einschraenkenderweise eine vorgezogene Ausfuehrungsform der erfindungsgemaessen Vorrichtung schematisch darstellen.

Es zeigen:

Fig. 1 eine teilweise Seitenansicht der wesentlichen Teile der erfindungsgemaessen Vorrichtung in einer Drehungsanfangslage;

Fig. 2 eine Seitenansicht aehnlich der Fig. 1 nach der Vervollstaendigung des ersten Winkeldrehungswertes;

Fig. 3 ebenfalls eine Seitenansicht aehnlich der Figuren 1 und 2 am Ende des zweiten Vervollstaendigungswertes der gewuenschten Winkeldrehung des Einspannzapfens, und zwar im dargestellten Beispiels von 90°, wobei diese Lage gleichzeitig der Einspannlage des Einspannzapfens in der Arbeitslage entspricht; und

Fig. 4 eine Draufsicht der erfindungsgemaessen Vorrichtung in Fig. 3.

In den verschiedenen Figuren weisen gleiche Teile gleiche Bezugszeichen auf. Die erfindungsgemaesse Vorrichtung ist insgesamt mit 1 bezeichnet. Dieselbe enthaelt eine doppeltwirkende Kolben/Zylinder-Steuereinheit 2 auf, deren Kolbenstange 3 in ihrem freien Ende 3a in einer Gleitfuehrungshalterung 4 gefuehrt ist.

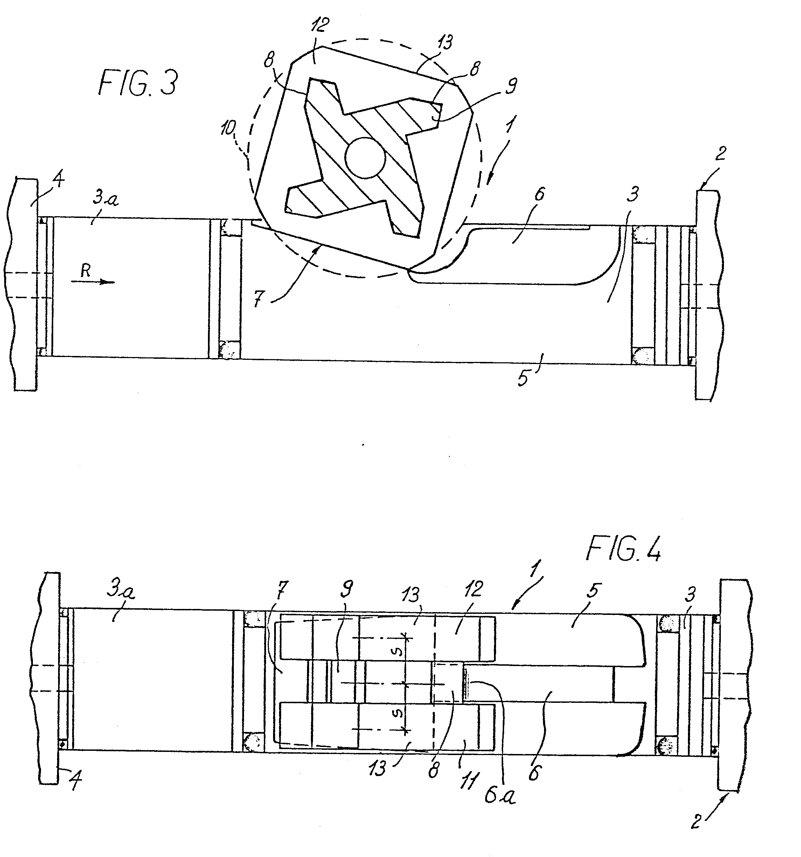

Erfindungsgemaess ist in der Kolbenstange 3 ein mittlerer schieberartiger Schiebeabschnitt 5 vorgesehen, in dem zwei schraege entgegengesetzte Drehungssteuerebenen 6 und 7 ausgearbeitet sind, die, wie aus Fig. 4 ersichtlich, in Laengsrichtung voneinander vom Abstand s versetzt sind.

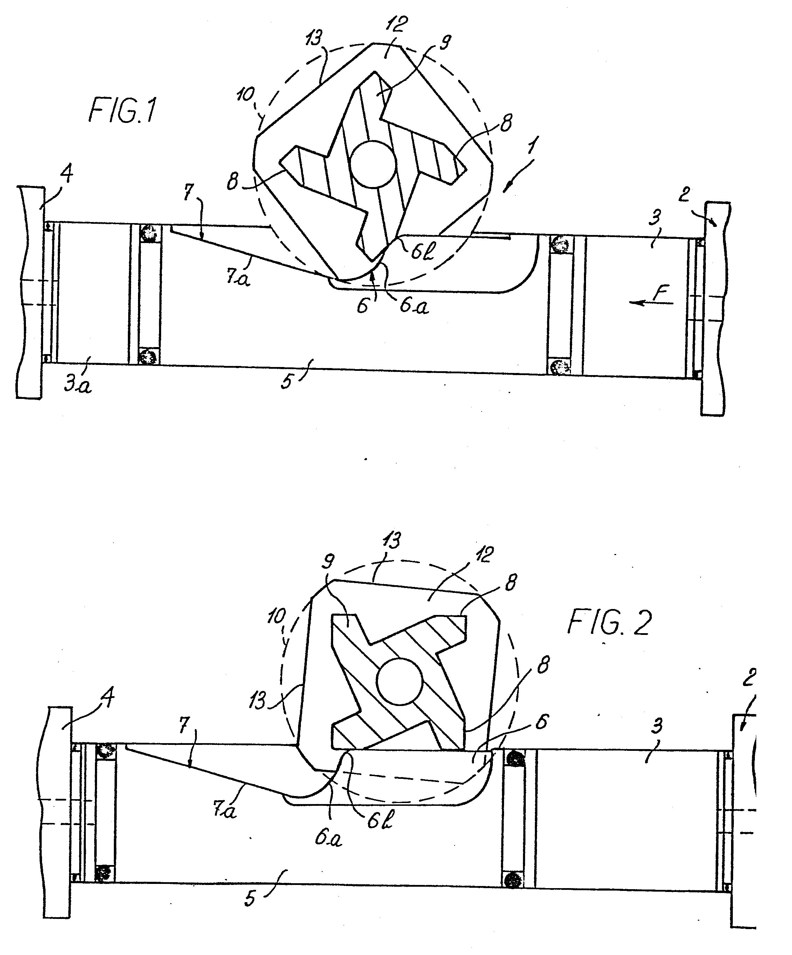

Wie aus den Fig. 1 - 3 ersichtlich, weist die mittlere schraege Steuerebene 6 eine laengliche stegartige Gestaltung mit einem Anschlagabschnitt 6a und einer abgerundeten Drehungskante 6b auf, wogegen die schraege Steuerebene 7 durch eine schraege Steuerflaeche 7a gebildet ist, deren Breite vorteilhafterweise im wesentlichen eine durchgehende Abflachung der Kolbenstange 3 einnimmt. Die schraege Steuerebene 6 ist mittig in dem Schiebeabschnitt 5 ausgearbeitet und arbeitet mit jeweils einer von einer Anzahl von Anschlagdrehungsflaechen 8 zusammen, die gleichmaessig auf einem mittleren im dargestellten Beispiel quadratischen Drahkranz 9 des insgesamt mit 10 bezeichneten, senkrecht in bezug auf die Kolbenstange 3 angeordneten, abzudrehenden Einspannzapfens verteilt sind. Der Einspannzapfen ist z. B. mit einem nicht naeher dargestellten Spannfutter od. dgl. einstueckig erhalten. Auf dem Einspannzapfen 10 ist ferner ein zweiter in zwei aeusseren Drehkraenzen 11, 12 unterteilter Drehungskranz 11, 12 ausgearbeitet, wobei im dargestellten Beispiel auf jedem aeusseren Drehungskranz ebenfalls vier Anschlagdrehungsflaechen 13 vorgesehen sind, die wie die Seiten eines Vierecks aehnlich wie die Anschlagdrehungsflaechen 8 jedoch in bezug auf die genannten Anschlagdrehungsflaechen 8 winklig versetzt angeordnet sind.

Die umfaenglichen Drehkraenze 9 und 11, 12 bzw. die durch die Anschlagdrehungsflaechen 8 und 13 gebildeten Vierecke sind zueinander koaxial und axial um den gleichen Abstand s voneinander entfernt, so dass die mittlere schraege Drehungssteuerebene 6 auf die Anschlagdrehungsflaechen 8 und die durchgehende schraege Drehungssteuerebene 7, die somit eine groessere Oberflaeche in bezug auf die mittlere Drehungssteuerebene 6 aufweist, mit ihren Seitenabschnitten mit den Anschlagdrehungsflaechen 13 der umfaenglichen aeusseren Kraenze 11 und 12 des Einspannzapfens 10 zusammenarbeiten.

Die Wirkungsweise der erfindungsgemaessen Vorrichtung wird nun in der Folge kurz erlaeutert.

Im dargestellten Beispiel betraegt die gesamte vorbestimmte Winkeldrehung des Einspannzapfens 10 90°.

Waehrend der Bewegung der Kolbenstange 3 in Richtung des Pfeils F beim Uebergehen von der Lage von Fig. 1 zu der Lage von Fig. 2 kommt die mittlere schraege Drehungssteuerebene 6 in Anlage mit jeweils einer der Anschlagdrehungsflaechen 8 des mittleren Drehkranzes bzw. Vierecks 9 und bewirkt dabei eine Drehung des Einspannzapfens 10 kleiner als 90 °, bzw. fuer den ersten Teilwinkeldrehungswert.

Am Ende der Durchfuehrung des Hubs in Richtung des Pfeils F erfolgt ein Hub in der Gegenrichtung, d.h. in Richtung des Pfeils R (Fig. 3), wobei waehrend dieses zweiten Hubs die schraege Drehungssteuerebene 7 in Anlage mit jeweils zwei benachbarten Anschlagdrehungsflaechen 13 der aeusseren Drehkraenze bzw. Vierecke 11, 12 und dabei die Durchfuehrung des zweiten Teilwinkeldrehungswertes bzw. die Vervollstaendigung der gewuenschten Winkeldrehung von 90° bewirkt.

Diese zweite Winkeldrehungsphase erfolgt beim Uebergehen von der Lage von Fig. 2 in der Lage von Fig. 3, wobei in dieser letzten Lage ebenfalls die Einspannungslage des Einspannzapfens 10 in der Arbeitslage des nicht naeher dargestellten Werkstueckes bewirkt wird.

Die zwei Bewegungshube gemaess den Pfeilen F und R erfolgen einfach durch eine an sich bekannte Betaetigung der doppeltwirkenden Kolben/Zylinder-Steuereinheit 2 in beiden Richtungen.

Aus dem oben Gesagten ist ersichtlich, dass mit der erfindungsgemaessen Vorrichtung die der vorliegenden Erfindung zugrunde gelegte Aufgabe wirksam geloest wird und die im Einleitungsteil erwaehnten Vorteile erzielt werden.

Insbesondere wird eine schnelle und zuverlaessige Betriebsweise in Anwesenheit einer einfachen und einen aeusserst zusammengedrungenen Platzbedarf erfordernden Bauweise erzielt.

Um verschiedene Drehungswerte zu erzielen, kann ferner eine Anzahl von verschiedene Schraege aufweisenden Drehungsebeneeinsaetze vorgesehen werden, die z.B. mittels Schrauben auf dazu vorgesehenen auf der Kolbenstange und auf dem Einspannzapfen ausgearbeiteten Aufnahmeflaechen loesbar befestigbar sind.

In der Praxis ist es ohne weiteres moeglich, einzelne Teile durch andere technisch und/oder funktionell gleichwertige Teile zu ersetzen, ohne dadurch den Schutzbereich vorliegender Erfindung zu verlassen. Z.B. kann die doppeltwirkende Kolben/Zylinder- -Steuereinheit durch zwei entgegengesetzte, gegebenenfalls zueinander versetzt angeordnete einfachwirkende Kolben/Zylinder-Steuereinheiten ersetzt werden und ferner koennen die zwei schraegen Steuerebenen auf der Kolbenstange aus zwei stegartigen untereinander parallelen und in bezug auf die Kolbenstange symmetrisch versetzten einfachen Steuerebenen bestehen. Darueber hinaus koennen auch die Abmessungen und die Materialien, sowie die geometrischen Gestaltungen und die Anordnungen der schraegen Drehungssteuerebenen sowie der Anschlagdrehungsflaechen beliebig gewaehlt werden, ohne dadurch ebenfalls den Schutzbereich vorliegender Erfindung zu verlassen.

Alle der Beschreibung, den Anspruechen und den Zeichnungen entnehmbaren Merkmale sind sowohl einzeln als auch in beliebiger Kombination zueinander als erfindungswesentlich zu betrachten.

Tecnomors S.p.A.
Via Roma 85
28017 S. Maurizio d'Opaglio (Novara), Italien

Patentansprueche

1. Vorrichtung zur Winkeldrehung von vorbestimmten Winkelwerten und zum Einspannen eines Einspannzapfens, z.B. eines Spannfutters, enthaltend zwei schraege Drehungssteuerebenen, sowie auf Umfangsdrehkraenzen des Einspannzapfens des Spannfutters od. dgl. verteilte Anschlagdrehungsflaechen, dadurch gekennzeichnet, dass sie auf ein und derselben Kolbenstange (3) einer doppeltwirkenden Kolben/Zylindersteuereinheit (2) zwei zueinander entgegengesetzt und in Laengsrichtung der Kolbenstange (3) um den Wert $s$ versetzt angeordnete schraege Drehungssteuerebenen (6, 7) aufweist, eine jede der letzteren (6, 7) mit einer Anzahl von auf wenigstens zwei voneinander um den genannten Wert $s$ des senkrecht in bezug auf die genannte Kolbenstange angeordneten Einspannzapfens (10) des Spannfutters od. dgl. versetzten Umfangskraenze (9; 11, 12) gleichmaessig verteilten Anschlagsdrehungsflaechen (8, 13) zusammenarbeitet, so dass waehrend der Bewegung der Kolbenstange (3) in der einen Richtung eine erste Drehungssteuerebene (6) in Anlage mit einer Anschlagsdrehungsflaeche (8) eines ersten Umfangskranzes (9) des Einspannzapfens (10) kommt und die Drehung des letzteren (10) fuer einen ersten Teilwinkelwert bewirkt und waehrend der Bewegung der Kolbenstange (3) in der anderen Richtung die zweite Drehungssteuerebene (7) in Anlage mit einer Anschlagsdrehungsflaeche (13) eines zweiten Umfangskranzes (11, 12) des Einspannzapfens (10) kommt und die Drehung des letzteren (10) fuer einen zweiten Teil - bzw. Vervollstaendigungswinkelwert der gewuenschten Winkeldrehung sowie das gleichzeitige Einspannen des Einspannzapfens (10) in der Arbeitslage bewirkt.

2. Vorrichtung nach Anspruch 1, dadurch gekennzeichnet, dass die eine schraege Drehungssteuerebene (6) als mittlerer Steg vorgesehen ist und die andere schraege Drehungssteuerebene (7) die ganze Abflachung der Kolbenstange (3) einnimmt, wobei die aeusseren Abflachungsabschnitte der genannten Abflachung mit jeweils einem von zwei aeusseren Drehkraenzen (11, 12) zusammenarbeiten.

3. Vorrichtung nach Anspruch 1, dadurch gekennzeichnet, dass die schraegen Drehungssteuerebenen (6, 7) auf der Kolbenstange (3) und auf dem Einspannzapfen (10) als z.B. mittels Schrauben befestigbare Drehungssteuerebeneeinsaetze vorgesehen sind, die verschiedene Schraegen aufweisen,um somit verschiedene Winkeldrehungswerte zu ermoeglichen.

4. Vorrichtung nach den vorhergehenden Anspruechen, dadurch gekennzeichnet, dass die die beiden schraegen Drehungssteuerebenen aufweisende Kolbenstange (3) durch zwei entgegengesetzte einfachwirkende Kolben/Zylinder-Einheiten betaetigt ist.

FIG.1

FIG. 2

FIG. 3

FIG. 4